# EUROPEAN PATENT APPLICATION

(11) **EP 1 604 718 A1**
(43) Date of publication of application: **14.12.2005**
(21) Application number: 04720988.7
(22) Date of filing: 16.03.2004
(51) Int. Cl.: B01D 39/20, B01D 46/00

(54) **CERAMIC FILTER**

(30) Priority: 17.03.2003 JP 2003071751
(71) Applicant: NGK INSULATORS, LTD., Nagoya-shi, Aichi-ken 467-8530 (JP)
(72) Inventor: SHIMODAIRA, Takanao, c/o NGK INSULATORS, LTD., Nagoya-shi, Aichi 4678530 (JP)
(74) Representative: TBK-Patent
(86) International application number: PCT/JP2004/003466
(87) International publication number: WO 2004/082806

(57) **Abstract**

A ceramic filter includes: a porous body (2) having a plurality of main flow paths (3) extending from one end face (4a) to the other end face (4b) of the body, and filtration membranes (5) arranged on the inner wall surfaces of the main flow paths (3). Slit-shaped auxiliary flow paths (9) are formed in predetermined portions so that specific main flow paths (3a) are communicated with an external space. Openings of the specific flow paths (3a) at both end faces (4a, 4b) are sealed. Fluid to be purified that flows into the filter from first opening portions (11) of the main flow paths (3) is purified by permeating it inside the porous body (2). The fluid is then taken out as purified fluid from an outer peripheral surface (6) of the porous body (2) and exits (10) of the auxiliary flow paths (9). The filter is **characterized in that** membrane thicknesses (x₁, x₂) of filtration membranes of adjacent main flow paths (3b) are greater than membrane thicknesses (y₁, y₂, y₃) of filtration membranes of an inner main flow path (3c). The ceramic filter can be used for a long period, and a deposit on the filter can be easily removed by counter flow washing.

## Description

### Technical Field

The present invention relates to a ceramic filter for use in filtration of fluid such as liquid or gas, more particularly to a ceramic filter usable for a long period and capable of easily removing a deposit on the filter by counter flow washing.

### Background Art

A ceramic filter is a filter utilizing a ceramic porous body and is superior in physical strength, durability, corrosion resistance and the like. Therefore, the filter is used in removing suspension substances, bacteria, powder dust and the like in liquid or gas, for example, in water treatment, exhaust gas treatment, or broad fields such as pharmaceutical and food fields.

In the ceramic filter, the ceramic porous body is used as a filtering material as it is in some cases, but, in general, on the surface of the porous body (substrate) made of a ceramic, a filtration membrane made of the ceramic as well is formed in order to enhance both of a filtering performance and a fluid permeation amount (i.e., treatment ability). For example, a mean pore diameter of the filtration membrane is constituted to be small at about 0.01 to 1.0 µm to secure the filtering performance. On the other hand, a mean pore diameter of the substrate is constituted to be large at about 1 µm to several hundreds of micrometers. Accordingly, a flow resistance to fluidity inside the substrate is lowered, and the fluid permeation amount (i.e., treatment ability) is enhanced.

Moreover, there is used a ceramic filter whose substrate is worked into a certain shape in accordance with a filtration purpose, and there is used for a general purpose a ceramic filter whose substrate is formed into a tubular shape having a single flow path, or a honeycomb shape (including a monolith shape) having a large number of parallel flow paths. The filter having a filtration membrane formed on the surface of the tubular or honeycomb-shaped substrate, for example, on an inner wall surface of the flow path is housed in a housing and is structured in such a manner that a substrate outer peripheral surface side is airtightly isolated from a substrate end face side, in which the flow paths open, via an O-ring or the like. Accordingly, the filter is utilized as a cross flow type or a dead end type filter.

Furthermore, in a large-sized ceramic filter, the body is ruptured in such a manner that predetermined flow paths communicate with an external space, and accordingly slit-shaped auxiliary flow paths (voids) are formed in some cases (see, e.g., JP-A-2000-153117). In a ceramic filter having such structure, since it is easy to recover purified fluid from the flow paths in the vicinity of a central portion of the porous body, a filtering process ability can greatly be enhanced, and further a flow rate distribution in the filter is preferably uniform.

As to the above-described various ceramic filters, there is a necessity of periodically performing counter flow washing to load the filter with pressure in a direction reverse to that at a usual use time, peel a trapped substance (deposit) deposited into a layer shape in the flow path from an inner wall of the flow path, and discharge and remove the deposit from end portions of the flow path. However, there has been a problem that the end portions of the flow paths are easily clogged with the trapped substance, and the counter flow washing is insufficient.

As a related technique for solving this problem, and facilitating the discharge and removal of the deposit by the counter flow washing, a ceramic filter has been described in which an opening diameter of at least one end portion of the flow path is formed to be large as compared with an inner diameter of a portion other than the end portion in the flow path (see, e.g., JP-A-2002-210314).

According to the ceramic filter disclosed in JP-A-2002-210314, the clogging caused by the deposit in a cell end portion is easily eliminated. However, even in such a ceramic filter, there is sometimes left a cell (cell incapable of being counter flow-washed) in which the deposit is not easily peeled from the cell inner wall, and any deposit is not discharged although the counter flow washing is performed. To prevent this cell incapable of being counter flow-washed from being left, it is supposed to be theoretically preferable to apply a more powerful counter flow washing pressure to the ceramic filter, but there is a problem that there is a limitation as to a counter flow washing pressure supply equipment which enables the applying, and therefore the applying is not practical.

### Disclosure of the Invention

The present invention has been made in view of the problem of the conventional art and aims to provide a ceramic filter usable for a long period and capable of easily removing a deposit on the filter by counter flow washing.

That is, according to the present invention, there is provided a ceramic filter comprising: a porous body having two end faces and an outer peripheral surface and having a plurality of main flow paths for fluid to be purified which penetrate from one end face to the other end face; and filtration membranes arranged on inner wall surfaces of the main flow paths, slit-shaped auxiliary flow paths being formed in portions including the outer peripheral surface of the porous body so that predetermined main flow paths (specific main flow paths) among the main flow paths communicate with an external space, the specific main flow paths being constituted by sealing openings of opposite end faces thereof, the fluid to be purified that flows into the filter from opening portions (first opening portions) in the one end face of the main flow path being allowed to permeate the inside of the porous body to be thereby purified, the fluid being then taken out as purified fluid from the outer peripheral surface of the porous body and exits of the auxiliary flow paths, wherein membrane thicknesses of the filtration membranes of the main flow paths (adjacent main flow paths) disposed adjacent to the specific main flow paths are greater than those of the filtration membranes of the main flow paths (inner main flow paths) other than the adjacent main flow paths.

In the present invention, an average value (X (µm)) of the membrane thicknesses of the filtration membranes of the adjacent main flow paths and an average value (Y (µm)) of the membrane thicknesses of the filtration membranes of the inner main flow paths preferably satisfy a relation of (X-Y)≥8.

In the present invention, an average value (A) of opening diameters of the first opening portions of the inner main flow paths and an average value (B) of opening diameters of the first opening portions of the adjacent main flow paths preferably satisfy a relation of (A-B)/B≥0.007.

### Brief Description of the Drawings

FIGS. 1(a), 1(b) are diagrams showing one embodiment of a ceramic filter of the present invention. FIG. 1(a) is a perspective view, and FIG. 1(b) is an enlarged view of a part P of FIG. 1(a).
FIG. 2 is a diagram schematically showing one example of a membrane producing method.
FIG. 3 is a schematic sectional view of a ceramic filter housed in a housing.

### Best Mode for Carrying out the Invention

A best mode for carrying out the present invention will be described hereinafter, but it should be understood that the present invention is not limited to the following embodiment, but design is appropriately modified, or improved based on ordinary knowledge of a person skilled in the art without departing from the scope of the present invention.

According to the present invention, there is provided a ceramic filter comprising: a porous body having two end faces and an outer peripheral surface and having a plurality of main flow paths for fluid to be purified which penetrate from one end face to the other end face; and filtration membranes arranged on inner wall surfaces of the main flow paths, slit-shaped auxiliary flow paths being formed in portions including the outer peripheral surface of the porous body so that predetermined main flow paths (specific main flow paths) among the main flow paths communicate with an external space, the specific main flow paths being constituted by sealing openings of opposite end faces thereof, the fluid to be purified that flows into the filter from opening portions (first opening portions) in the one end face of the main flow path being allowed to permeate the inside of the porous body to be thereby purified, the fluid being then taken out as purified fluid from the outer peripheral surface of the porous body and exits of the auxiliary flow paths, wherein membrane thicknesses of the filtration membranes of the main flow paths (adjacent main flow paths) disposed adjacent to the specific main flow paths are greater than those of the filtration membranes of the main flow paths (inner main flow paths) other than the adjacent main flow paths. An embodiment of the present invention will be described hereinafter specifically.

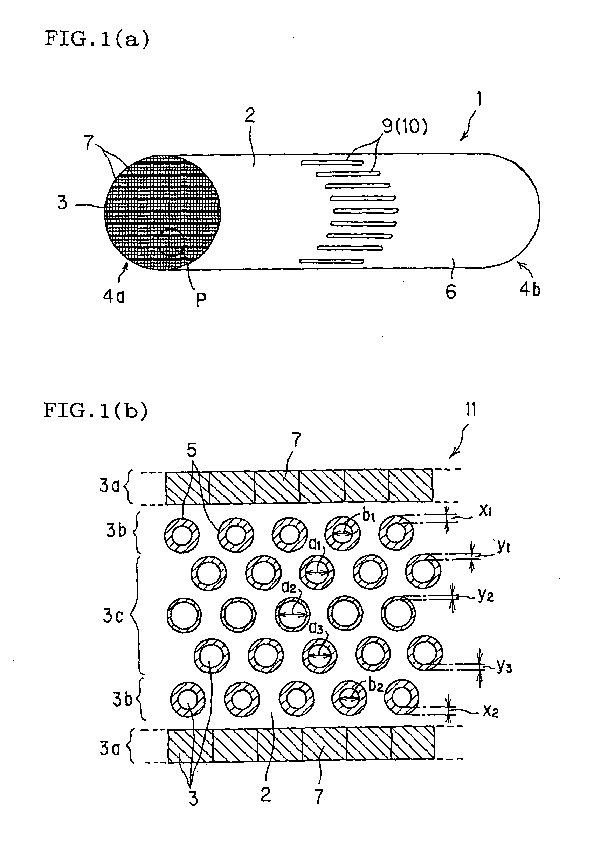

FIGS. 1(a), 1(b) are diagrams showing one embodiment of the ceramic filter of the present invention, FIG. 1(a) is a perspective view, and FIG. 1(b) is a P-part enlarged view. A ceramic filter 1 of the present embodiment is constituted by: a porous body 2 having a plurality of main flow paths 3 extending from one end face 4a to the other end face 4b and filtration membranes 5 arranged on inner wall surfaces of the main flow paths 3. Slit-shaped auxiliary flow paths 9 are formed in portions including an outer peripheral surface 6 of the porous body 2 so that specific main flow paths 3a communicate with an external space, and opening portions of both end faces of the specific main flow paths 3a are sealed by sealing portions 7. When fluid such as liquid or gas is filtered and purified using the ceramic filter 1, fluid to be purified is allowed to flow into the filter from opening portions (first opening portions 11) on one end face 4a side of the main flow paths 3, and is allowed to permeate the inside of the porous body 2 to thereby purify the fluid. The fluid is taken out as purified fluid from the outer peripheral surface 6 of the porous body 2 and exits 10 of the auxiliary flow paths 9.

The fluid to be purified circulates in adjacent main flow paths 3b disposed adjacent to the specific main flow paths 3a, and inner main flow paths 3c which are the main flow paths other than the adjacent main flow paths 3b. The purified fluid passed through the filtration membranes 5 permeates the inside of the porous body 2 until the fluid reaches the outer peripheral surface 6 or the specific main flow paths 3a. The adjacent main flow paths 3b have a greater permeation amount of the fluid to be purified because of a difference in distance (length) for the fluid to reach the outer peripheral surface 6 or the specific main flow paths 3a between the adjacent main flow paths 3b and the inner main flow paths 3c positioned inside the adjacent main flow paths 3b.

Therefore, in the conventional ceramic filter, there has been a problem that the deposit which cannot completely be removed even by the counter flow washing remains (a so-called increase of fouling) in the pores of the filtration membranes 5 especially in the adjacent main flow paths 3b, or a counter flow washing pressure cannot easily reach the inner main flow paths 3c, and the deposit cannot be removed. However, in the ceramic filter 1 of the present embodiment, the membrane thicknesses of the filtration membranes 5 of the adjacent main flow paths 3b disposed adjacent to the specific main flow paths 3a are greater than those of the filtration membranes 5 of the inner main flow paths 3c which are the main flow paths other than the adjacent main flow paths 3b. That is, permeation resistances are intentionally raised in the adjacent main flow paths 3b closer to the specific main flow paths 3a to adjust a balance with permeation resistances in the inner main flow paths 3c. Therefore, there are exhibited effects that the increase of the fouling in the adjacent main flow paths 3b can be suppressed, the counter flow washing pressure easily reaches the inner main flow paths 3c, and the deposit can be easily removed. The filter can be used for a long period, and the deposit can easily be removed by the counter flow washing.

Moreover, even in the case that the counter flow washing is performed to load the ceramic filter 1 under a usual counter flow washing pressure by use of a general pressure supply equipment, the deposit can easily be discharged from the first opening portions 11 (one end face 4a). It is possible to largely reduce a possibility that main flow paths blocked without discharging any deposit and lacking in filtering functions (blocked main flow paths) remain even after the counter flow-washing.

Moreover, as shown in FIG. 1(b), in the ceramic filter of the present embodiment, an average value (X (µm)) of the membrane thicknesses (x₁, x₂) of the filtration membranes 5 of the adjacent main flow paths 3b and an average value (Y (µm)) of the membrane thicknesses (y₁, y₂, y₃) of the filtration membranes 5 of the inner main flow paths 3c preferably satisfy a relation of (X-Y)≥8, further preferably satisfy a relation of (X-Y)≥10, especially preferably satisfy a relation of (X-Y)≥11. When the value of (X-Y) is less than 8, a remaining ratio of the blocked main flow paths unfavorably rises even by the counter flow washing. It is to be noted that in the present invention, there is not any special limitation as to the upper limit value of (X-Y), and the value of 500 or less is preferable from viewpoints of substantial manufacturability, usability and the like.

Furthermore, as shown in FIG. 1(b), in the ceramic filter of the present embodiment, an average value (A) of opening diameters (a₁, a₂, a₃) of the first opening portions 11 of the inner main flow paths 3c and an average value (B) of opening diameters (b₁, b₂) of the first opening portions 11 of the adjacent main flow paths 3b preferably satisfy a relation of (A-B)/B≥0.007, further preferably satisfy a relation of (A-B)/B≥0.008, especially preferably satisfy a relation of (A-B)/B≥0.009. When the value of "(A-B)/B" is 0.002 or less, a remaining ratio of the blocked main flow paths unfavorably rises even by the counter flow washing. Incidentally, in the present invention, there is not any special limitation as to the upper limit value of "(A-B)/B", and the value of 5 or less is preferable from viewpoints of substantial manufacturability, usability and the like. Incidentally, the "opening diameter" mentioned in the present invention refers to a diameter in a case where an opening shape is circular, a length of a long axis in a case where the shape is elliptical or oval, a length of a longest diagonal line in a case where the shape is polygonal, or a longest distance between two points taken on an outer periphery of a sectional shape in a case where the opening shape is amorphous.

Next, a method of manufacturing a ceramic filter of the present invention will be described. A ceramic filter of the present invention can be manufactured in conformity to a conventionally known method of manufacturing a ceramic filter. First, in addition to an aggregate and a sintering assistant, a dispersion medium and an organic binder are added, and, if necessary, a surfactant, a plasticizer and the like are added, and a clay obtained by kneading materials is extruded to obtain a formed body. The aggregate is a main constituent of a porous body, and is constituted by ceramic particles having an average particle diameter of about 5 to 200 µm. The aggregate-containing clay is formed and fired obtain the porous body having pores in accordance with particle diameters of the aggregate. The material of the aggregate may be appropriately selected in such a manner as to be adapted to a purpose of filtration. For example, alumina, mullite, cordierite, silicon carbide, ceramic scrap or the like can be used.

Moreover, the sintering assistant is an additive material for reinforcing bonding between the aggregates, and is constituted by ceramic particles having an average particle diameter of less than 5 µm. When the assistant is added to the clay together with the aggregate, the bonding between the aggregates is strengthened, and a solid porous body is formed. There is not any special limitation to the material of the sintering assistant, and, for example, alumina, silica, zirconia, titania, glass frit, feldspar, cordierite or the like can be used. Usually, about 10 to 35 mass% of the assistant may be added with respect to a total mass of the aggregate and the sintering assistant in order to secure the bonding strength between the aggregates and inhibit the pores of the porous body from being blocked.

The formed body obtained by extrusion is dried, cut into a predetermined length perpendicularly to a flowing direction, and fired to obtain the porous body. Incidentally, a mean pore diameter of the resultant porous body is about 1 to 30 µm. To form the slit-shaped auxiliary flow paths 9 shown in FIG. 1(a), prior to or after the firing of the porous body 2, the body may be ruptured by a cutting tool such as a diamond electrodeposition cutter so that the rows of the specific main flow paths, in which the auxiliary flow paths 9 are to be formed, communicate with the external space. Here, as to the specific main flow paths communicating with the auxiliary flow paths 9, opening portions of opposite end faces of the porous body 2 are sealed by plugging members or the like to provide sealed portions 7 in order to inhibit the fluid to be purified from mixing in the purified fluid. That is, any filtration membrane described later does not have to be provided on the inner wall surfaces of the specific main flow channels.

Subsequently, filtration membranes are provided on inner wall surfaces of main flow paths of the resultant porous body. Here, the filtration membranes mentioned in the present invention refer to thin-membrane-shaped ceramic porous bodies having a small mean pore diameter as compared with the porous body, and may have a composite layer structure in which two or more layers are provided as the case may be. In general, the filtration membranes refer to members for securing a filtering function of the ceramic filter, and the filtration membranes mentioned in the present invention include intermediate layers (layers other than the uppermost layer) in a case where the composite layer structure is employed.

The filtration membranes can be formed by forming membranes on the inner wall surfaces of the main flow paths of the porous body by the use of a slurry containing ceramic particles having an average particle diameter of about 0.1 to 5 µm, which is small as compared with the aggregate constituting the porous body, and firing the membranes. Specifically, the ceramic particles are dispersed in a dispersion medium such as water, and a sintering assistant, an organic binder, a pH regulator, a surfactant or the like is added, if necessary, to prepare a slurry (slurry for membrane production) for the filtration membrane. After providing the membranes on the inner wall surfaces of the main flow paths by use of the slurry, the membranes are dried and fired to provide the filtration membranes. The mean pore diameter of the filtration membranes is about 0.1 to 5 µm.

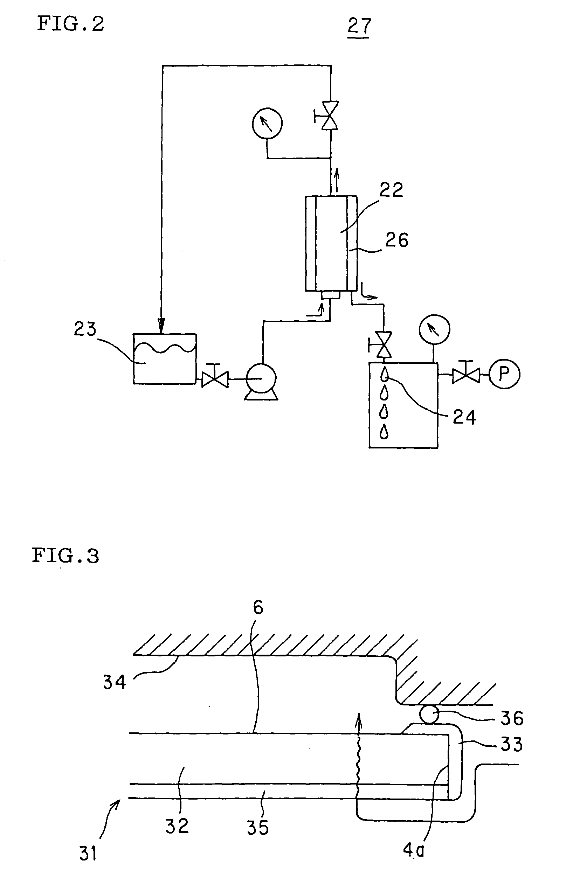

The ceramic filter of the present invention is characterized in a structure in which the membrane thicknesses of the filtration membranes of the adjacent main flow paths are greater than those of the filtration membranes of the inner main flow paths. Examples of a method of forming the filtration membranes having such structure include a method in which a membrane production apparatus 27 shown in FIG. 2 is used. Specifically, a slurry 23 for membrane production is prepared as described above, the slurry 23 for membrane production is circulated from the other end face toward the one end face (or from one end face toward the other end face) of a porous body 22, and a pressure on an outer peripheral surface 26 side is reduced by a vacuum pump P. A solid content contained in the slurry 23 for membrane production is then deposited in a layer shape on the inner wall surfaces of the main flow paths to provide membrane layers. In this case, the produced membrane layer is formed to be gradually thin from the adjacent main flow paths through which the filtered water easily passes and which has a large permeation flow rate toward the inner main flow paths through which the filtered water does not easily flow and which has a less permeation flow rate.

Filtered water 24 is discharged from the outer peripheral surface 26 of the porous body 22 by an amount corresponding to a desired membrane thickness of the whole produced membrane layer. Incidentally, the slurry 23 for membrane production, which has flown out of the end face of the porous body 22, may be circulated. Thereafter, after completing the discharging of the filtered water 24, a pressure on a filtered water side is reduced to evacuate/dewater the porous body 22 in order to maintain the shape of the produced membrane layer. Alternatively, there are prepared a plurality of types of sheet-shaped sealing members each having a predetermined opening pattern. These members are alternately attached to the opening end faces of the porous body, and the slurry for membrane production is allowed to flow into the paths from the opening end faces so that produced membrane layers having different membrane thicknesses can be formed for each main flow path.

Moreover, also by adding an appropriate filtration resistance agent including polysaccharide water-soluble gum is added to the slurry for membrane production and controlling a concentration of the agent, it is possible to control the membrane thickness of the filtration membrane. The filtration resistance agent is an additive having a function of raising a water passing resistance at a time when the filtered water passes through the layer which is formed by the deposition of the solid content contained in the slurry for membrane production into a layer shape on the inner wall surface of the main flow path to form the layer. Specifically, when an added amount of the filtration resistance agent is increased, and the water passing resistance of the layer constituted of the deposited solid content indicates a predetermined value or a greater value, the filtered water does not easily flow out any more, and the membrane grows excessively slowly. Therefore, the membrane growth in the inner main flow paths catches up with that in the adjacent main flow paths, and, as a result, uniform membranes are obtained with a small membrane thickness difference. Therefore, when the amount of the filtration resistance agent to be added to the slurry for membrane production is reduced (or the agent is not added), the ceramic filter of the present invention can be manufactured.

Subsequent to a series of operations described above, drying and firing can be performed to form the filtration membranes, and a ceramic filter of the present invention can be manufactured.

Furthermore, the ceramic filter of the present invention may be provided with a sealing material in a predetermined position as the case may be. The sealing material mentioned in the present invention refers to a member for inhibiting invasion of the fluid to be purified from the end face of the porous body, specifically from one end face 4a in FIG. 1(a), to the inside of the porous body 2, and the material is preferably provided in such a manner as to coat the end face 4a of the porous body 2 and the filtration membrane in the vicinity of the end face 4a.

The sealing material can be formed by applying a glaze consisting of a glassy material (glass frit, etc.) such as borosilicate glass, silica glass, or feldspathic glass and firing the glaze. However, the sealing material is not limited to the glaze as long as the pore diameters are equal to or less than those of the filtration membranes. Also, by forming the filtration membrane instead of the sealing material as the case may be, it is possible to prevent the invading of the fluid to be purified from the end face of the porous body into the porous body.

Next, a method of using the ceramic filter of the present invention will be generally described in a case where water (water to be purified) is used as the fluid to be purified. As shown in FIG. 3, in a ceramic filter 31 of the present embodiment, a predetermined filtration membrane 35 is provided on an inner wall surface of a main flow path of a porous body 32. One end face 4a of the porous body 32 and the filtration membrane 35 in the vicinity of the end face 4a are coated with a sealing material 33. The filter is housed in a housing 34 via an O-ring 36 in a sealing material 33 portion. When the water to be filtered is purified using this ceramic filter 31, the water to be purified is allowed to flow into the filter from a first opening portion on one end face 4a side of the main flow path and permeate the filtration membrane 35 and the porous body 32 to thereby purify the water, and the water is taken out as purified water from an outer peripheral surface 6 of the porous body 32.

Since deposit is deposited into a layer shape on the surface of the filtration membrane 35 accompanying repeating of the filtration, the filter is periodically loaded with a counter flow washing pressure in a direction reverse to that at a usual use time to perform the counter flow washing. During the counter flow washing, first the filter is loaded with a primary counter flow washing pressure from the outer peripheral surface 6 side of the porous body 32 to peel the deposit from the filtration membrane 35. Thereafter, the filter is loaded with a secondary counter flow washing pressure from the other opening portion (second opening portion), so that the deposit can be discharged and removed from the first opening portion.

The present invention will be described hereinafter more specifically in accordance with examples. However, the present invention is not limited to these examples.

### (Examples 1 to 4)

As an aggregate, alumina sieved in such a manner as to have particle diameters of 5 to 300 µm was used. To this aggregate, feldspar having particle diameters of 0.5 to 5 µm was added as a sintering assistant, water was added as a dispersion medium, and methyl cellulose was added as an organic binder. Clay obtained by kneading was extruded to obtain a honeycomb formed body having a plurality of main flow paths. This formed body was dried, thereafter cut perpendicular to a flowing direction in such a manner as to have a predetermined length, and fired to obtain a honeycomb porous body having an inner diameter of 180 mm, a flow path inner diameter of 2.2 mm, a length of 1000 mm, and about 2000 main flow paths. A mean pore diameter of the porous body, measured by mercury porosimetry, was 10 µm.

A portion including an outer peripheral surface of the porous body was ruptured by a diamond electrodeposition cutter so that rows of specific main flow paths communicated with an external space. Subsequently, opening portions of both end faces of the specific main flow paths were sealed by plugging members to provide slit-shaped auxiliary flow paths. Incidentally, the specific main flow path rows communicating with the auxiliary flow paths were formed by six rows (the state that five main flow paths having no sealed portion are present between the specific main flow path rows having sealed portions as viewed from the opening end face of the porous body).

Next, alumina sieved in such a manner as to have particle diameters of 0.5 to 10 µm was used, water was added as the dispersion medium, glass frit was added as the sintering assistant, and polysaccharide water-soluble gum was added as the organic binder to prepare a slurry for membrane production (slurry for intermediate membrane production). Membranes were produced on inner wall surfaces of the main flow paths of the porous body 22 by the use of a membrane production apparatus 27 shown in FIG. 2, and the membranes were thereafter dried and fired to form intermediate membranes.

Next, titania sieved in such a manner as to have particle diameters of 0.1 to 1.0 µm was used, water was added as the dispersion medium, and polysaccharide water-soluble gum and polyvinyl alcohol were added as the organic binders to prepare a slurry for filtration membrane production. Membranes were produced on the surfaces of the intermediate membranes produced beforehand on the inner wall surfaces of the main flow paths of the porous body by the use of the membrane production apparatus 27 shown in FIG. 2, the membranes were thereafter dried and fired to form filtration membranes, and ceramic filters (Examples 1 to 4) were manufactured. The mean pore diameter of the filtration membranes (including the intermediate membranes), measured by mercury porosimetry, was 0.1 µm. Incidentally, Table 1 shows concentrations (mass% to solid content) of polysaccharide water-soluble gum (filtration resistance agent) added to the slurry for intermediate membrane production and the slurry for filtration membrane production. Here, "mass% to solid content" shown in Table 1 refers to mass% to alumina and glass frit contained in the slurry for intermediate membrane production, or to titania contained in the slurry for filtration membrane production.

### (Comparative Examples 1, 2)

Ceramic filters (Comparative Examples 1, 2) were manufactured in a method similar to that of each of Examples 1 to 4 described above, except that concentrations (mass% to solid content) of polysaccharide water-soluble gum (filtration resistance agent) added to a slurry for intermediate membrane production and a slurry for filtration membrane production were set to those shown in Table 1.

**(Table 1)**

| | | Ex.1 | Ex.2 | Ex.3 | Ex.4 | C.E.1 | C.E.2 |
|---|---|---|---|---|---|---|---|
| Filtration resistance agent concentration (mass% to solid content | Slurry for intermediate membrane production | 0.2 | 0.3 | 0.4 | 0.5 | 0.6 | 0.6 |
| | Slurry for filtration membrane production | 1.25 | 1.25 | 1.25 | 2.5 | 2.5 | 2.5 |

Moreover, Table 2 shows, for each ceramic filter, an average value (X) of membrane thicknesses of filtration membranes in adjacent main flow paths, an average value (Y) of the membrane thicknesses of the filtration membranes in inner main flow paths; average membrane thickness, X-Y, an average value (A) of opening diameters of the first opening portions of the inner main flow paths, an average value (B) of opening diameters of the first opening portions of the adjacent main flow paths, and (A-B)/B.

### (Actual Operation)

An actual operation was performed using a purification apparatus constituted by disposing in a housing the manufactured ceramic filters of Examples 1 to 4, Comparative Examples 1, 2. Specifically, water was drawn from an incoming water intake of river in Chubu District, aggregated in accordance with a usual method, and thereafter filtered using the ceramic filters of Examples 1 to 4, Comparative Examples 1, 2. At this time, a filtration flux was 2 m/day, and counter flow washing was performed on a four-hour schedule. The counter flow washing was performed on conditions that: (1) 1.51/m² of water was passed from the outer peripheral surface toward the filtration membrane at a pressure of 500 kPa to peel a deposit in a circulation path from the filtration membranes; and (2) thereafter 0.51/m² of water was passed from the second opening portions toward the first opening portions at a blowing pressure of 150 kPa. At this time, the deposit discharged had a dry weight of 27.2 to 144.4 g per counter flow washing. Incidentally, widths exist in the above-described numerical values because an amount of sludge contained in the treated water has a width. After operating the apparatus continuously for a month, blocked situations of the circulation paths of each ceramic filter were visually observed.

The main flow paths where deposits were discharged and removed on the counter flow washing conditions of the above (1), (2) were assumed as "non-blocked main flow paths", the main flow paths where deposits were not discharged or removed even on the counter flow washing conditions of the above (1), (2) were assumed as "blocked main flow paths", and the number of the main flow paths was measured for each ceramic filter. Table 2 shows the number of the blocked main flow paths, and a ratio of the blocked main flow paths (a ratio of the number of the blocked main flow paths to that of the main flow paths).

Furthermore, a total main flow path flux (m³/(day×cell), an adjacent main flow path flux P (m³/(day×cell), and an inner main flow path flux Q (m³/(day×cell) at 25°C, 100 kPa were measured. In a measurement method, water was first passed from a counter flow washing direction, water flowing out of the adjacent and inner main flow paths was independently sampled from each of the adjacent and inner main flow paths with a rubber tube, and a water amount (volume) per unit time was measured. Measurement results, and a value of P/Q are shown in Table 2.

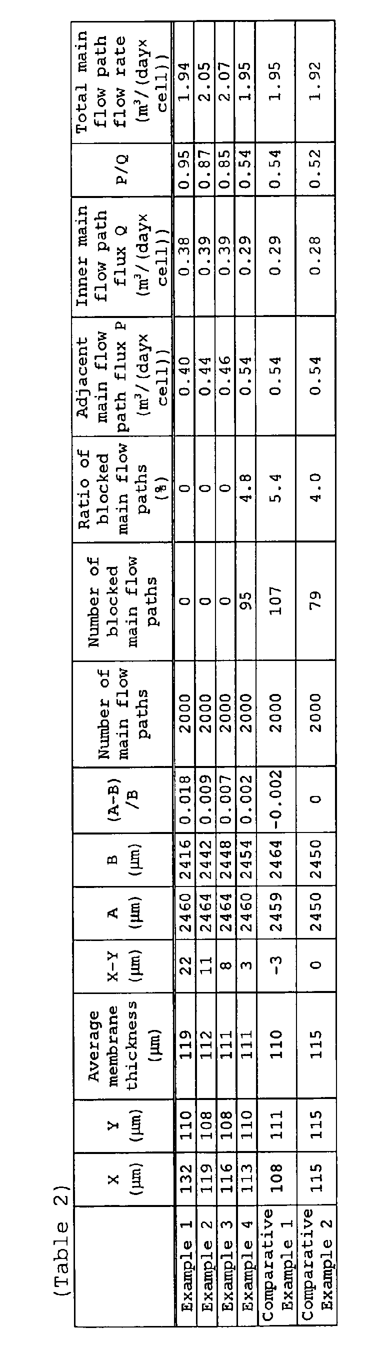

It is clear from the results shown in Table 2 that as to the ceramic filters of Examples 1 to 4 in which the average value (X) of the membrane thicknesses of the filtration membranes of the adjacent main flow paths is greater than the average value (Y) of the membrane thicknesses of the filtration membranes of the inner main flow paths, the number of the blocked main flow paths after performing the counter flow washing, and the blocked main flow path ratio are smaller, and the deposit is easily removed as compared with the ceramic filter (Comparative Example 1) in which the value of X is smaller than that of Y, and the ceramic filter (Comparative Example 2) in which X and Y have an equal value. Therefore, superiority of the ceramic filter of the present invention can be confirmed. Furthermore, it has been found that as to the ceramic filters of Examples 1 to 3, all of the deposits of the main flow paths are removed by the counter flow washing. Therefore, it is clear that when (1) the values of X and Y satisfy a relation of (X-Y)≥8 and/or (2) the values of A and B satisfy a relation of (A-B)/B≥0.007, it is further easy to remove the deposits by the counter flow washing.

Moreover, it has been found from the adjacent main flow path flux P, the inner main flow path flux Q, and the value of P/Q that especially the ceramic filters of Examples 1 to 3 have less differences of the flux between the adjacent and inner main flow paths as compared with the ceramic filters of Comparative Examples 1, 2. A life of the ceramic filter counter flow-washed and repeatedly used depends on a life of the main flow path indicating a maximum flux among all the main flow paths. It has been clarified that the ceramic filter of the present invention has a remarkably small fluctuation of a flux distribution of the main flow path, and therefore has a long life, and the filter can be used for a long period.

### Industrial Applicability

As described above, in a ceramic filter of the present invention, since membrane thicknesses of filtration membranes of adjacent main flow paths are greater than those of the filtration membranes of inner main flow paths, the filter can be used for a long period, and a deposit on the filter can be easily removed by counter flow washing. Therefore, the filter is preferable as a filter for removing suspension substances, bacteria, powder dust and the like in liquid or gas, for example, in water treatment or exhaust gas treatment, or broad fields such as pharmaceutical food fields.

## Claims

1. A ceramic filter comprising: a porous body having two end faces and an outer peripheral surface and having a plurality of main flow paths for fluid to be purified extending from one end face to the other end face; and filtration membranes arranged on inner wall surfaces of the main flow paths, slit-shaped auxiliary flow paths being formed in portions including the outer peripheral surface of the porous body so that predetermined main flow paths (specific main flow paths) among the main flow paths communicate with an external space, the specific main flow paths being constituted by sealing openings of opposite end faces thereof, the fluid to be purified that flows into the filter from opening portions (first opening portions) in the one end face of the main flow path being allowed to permeate the inside of the porous body to be thereby purified, the fluid being then taken out as purified fluid from the outer peripheral surface of the porous body and exits of the auxiliary flow paths,
wherein membrane thicknesses of the filtration membranes of the main flow paths (adjacent main flow paths) disposed adjacent to the specific main flow paths are greater than those of the filtration membranes of the main flow paths (inner main flow paths) other than the adjacent main flow paths.

2. The ceramic filter according to claim 1, wherein an average value (X (µm)) of the membrane thicknesses of the filtration membranes of the adjacent main flow paths and an average value (Y (µm)) of the membrane thicknesses of the filtration membranes of the inner main flow paths satisfy a relation of (X-Y)≥8.

3. The ceramic filter according to claim 1 or 2, wherein an average value (A) of opening diameters of the first opening portions of the inner main flow paths and an average value (B) of opening diameters of the first opening portions of the adjacent main flow paths satisfy a relation of (A-B)/B≥0.007.
